# NEW EUROPEAN PATENT SPECIFICATION

(11) **EP 3 596 019 B2**
(45) Date of publication and mention of the opposition decision: **06.03.2024**
(45) Mention of the grant of the patent: 16.06.2021
(21) Application number: 18712127.2
(22) Date of filing: 12.03.2018
(51) Int. Cl.: C03B 33/02, C03B 33/09, B23K 26/53, B23K 103/00

(54) **CONTROLLED SEPARATION OF LASER PROCESSED BRITTLE MATERIAL**
KONTROLLIERTE TRENNUNG VON LASERBEARBEITETEN SPRÖDMATERIALIEN
SÉPARATION COMMANDÉE DE MATÉRIAU FRAGILE TRAITÉ AU LASER

(30) Priority: 13.03.2017 US 201762470587 P
(43) Date of publication of application: 22.01.2020
(73) Proprietor: Coherent LaserSystems GmbH & Co. KG, 37079 Göttingen (DE)
(72) Inventor: MÜLLERS, Ludger, 81543 München (DE)
(74) Representative: Williams, Andrew Richard
(86) International application number: PCT/EP2018/056115
(87) International publication number: WO 2018/166988

(56) References cited:
- US-A1- 2014 027 951
- US-A1- 2015 136 743
- US-A1- 2015 367 442
- US-A1- 2016 280 580
- US-A1- 2017 057 017

## Description

### PRIORITY CLAIM

This application claims priority to U.S. Provisional Application Serial No. 62/470,587, filed March 13, 2017.

### TECHNICAL FIELD OF THE INVENTION

The present invention relates in general to cutting brittle materials using beams of laser-radiation. The invention relates in particular to cutting brittle materials using a focused beam of pulsed laser-radiation and controlled separation of cut materials using a beam of laser-radiation.

### DISCUSSION OF BACKGROUND ART

Laser material-processing is increasingly used for cutting, drilling, marking, and scribing a wide range of materials, including brittle materials such as glass, ceramics, silicon, and sapphire. Traditional mechanical processing produces unwanted defects, such as micro-cracks that may propagate when the processed brittle material is stressed, thereby degrading and weakening the processed brittle material. Laser-processing of brittle materials using focused beams of laser-radiation produces precise cuts and holes, having high-quality edges and walls, while minimizing the formation of such unwanted defects. Progress in scientific research and manufacturing is leading to laser-processing of an increasing range of brittle materials, while demanding increased processing speed and precision.

Transparent brittle materials interact with focused beams of pulsed laser-radiation through non-linear absorption of the laser-radiation. The pulsed laser-radiation may comprise a train of individual pulses, or rapid bursts of pulses. Each individual pulse or burst of pulses creates a defect in a workpiece of transparent brittle material at the focus of the beam. An article is cut from the workpiece by translating the focused beam to create a row of defects along a cutting line in the workpiece.

Often the row of defects just weakens the material along the cutting line. To fully separate the article from the rest of the workpiece requires an additional step of applying stress across the cutting line. Applying mechanical stress is sometimes sufficient to cause separation along the cutting line. Thermal stress is applied in applications that require high-quality edges, without unwanted defects such as chips and micro-cracks. Precise and controlled separation has been demonstrated using a laser-beam having a wavelength that is absorbed by the material and relatively high average power. The absorbed laser-power creates a thermal gradient across the cutting line, which causes cracks to propagate between the discrete defects produced by the pulsed laser-radiation, thereby forming a continuous break along the cutting line.

By way of example, a highly focused beam of ultra-short laser-pulses creates a self-guiding "filament" in a glass workpiece. Propagation of such a filament creates a long defect through the workpiece in the form of a void. A row of voids is created by translating the focused ultra-short pulsed laser-beam along the cutting line. A carbon dioxide (CO₂) laser having wavelengths of around 10 micrometers (µm) is then used to separate glass, by translating the CO₂ laser-beam along the cutting line. Such a laser-cutting process "SmartCleave" was developed by Rofin-Sinar Technologies Inc. and is described in U.S. Patent No. 9,102,007 and U.S. Patent No. 9,296,066, each thereof owned by the assignee of the present invention.

In traditional "scribe-and-break" cutting and in laser-cutting, "relief lines" may be necessary for separating articles having rounded shapes. Relief lines are additional lines that radiate from curved sections of a cutting line into a portion of the workpiece to be scrapped. Such curved sections may be either concave or convex. Relief lines may be scribed or cut in the same way as the cutting line. Sacrificial breaking of the portion to be scrapped into a plurality of pieces defined by the relief lines causes more controlled and reliable separation along the cutting line.

Although the additional separation step of applying stress breaks any residual bonding between the article and the rest of the workpiece, in some applications the article is still physically inhibited from separating from the rest of the workpiece. This is a particular problem for articles having concave curved sections and for cutting processes that remove relatively little material and produce rough edges. For example, focused beams of ultra-short laser-pulses make precise and fine cuts in glass. Typical Rz surface roughness for a filament cutting process using laser-pulses having a duration of about 10 picoseconds (ps) is about 10 µm. Even this modest surface roughness on the cut-edges causes sufficient stiction to prevent separation of curve sections.

US patent application with publication No. US2014/027951 discloses methods of cutting brittle materials with a tailored edge shape and roughness. The methods include directing one or more tools to a portion of brittle material causing separation of the material into two or more portions, where the as-cut edge has a predetermined and controllable geometric shape and/or surface morphology. The one or more tools can comprise energy (e.g., a femtosecond laser beam or acoustic beam) delivered to the material without making a physical contact.

US patent application with publication No. US2016/280580 discloses a device and method for cutting out contours from planar substrates by means of a laser.

US patent application with publication No. US2015/136743 discloses a method for machining and releasing closed forms from a transparent, brittle substrate including using a burst of ultrafast laser pulses to drill patterns of orifices in the substrate.

There is need for a method of laser-cutting articles having rounded shapes from brittle materials, which provides reliable and clean separation of articles from the rest of the workpiece. Preferably, the method would require minimal additional apparatus and minimal additional processing time.

### SUMMARY OF THE INVENTION

An aspect of the invention is defined by independent claim 1. Optional features are defined by the dependent claims.

### BRIEF DESCRIPTION OF THE DRAWINGS

The accompanying drawings, which are incorporated in and constitute a part of the specification, schematically illustrate a preferred embodiment of the present invention, and together with the general description given above and the detailed description of the preferred embodiment given below, serve to explain principles of the present invention.
FIGS. 1A and 1B schematically illustrate one preferred embodiment of laser-cutting apparatus for implementing the laser-cutting and separating method of the present invention, the apparatus including two laser-sources, each delivering a beam of laser-radiation that is directed to a workpiece to be cut and separated.
FIG. 2A schematically illustrates a prior-art solution for laser-cutting and separating an item from a workpiece made of a brittle material.
FIGS. 2B - 2E schematically illustrate one preferred embodiment of laser-cutting and separating method in accordance with the present invention, for cutting an item from a workpiece made of a brittle material and for controlled separation of scrap material from the cut item.
FIGS. 3A - 3C schematically illustrate exemplary inventive release features for cutting and separating an item in accordance with the present invention.
FIGS. 4A - 10B schematically illustrate exemplary release features for separating scrap material from a cut item having an inside curve.

### DETAILED DESCRIPTION OF THE INVENTION

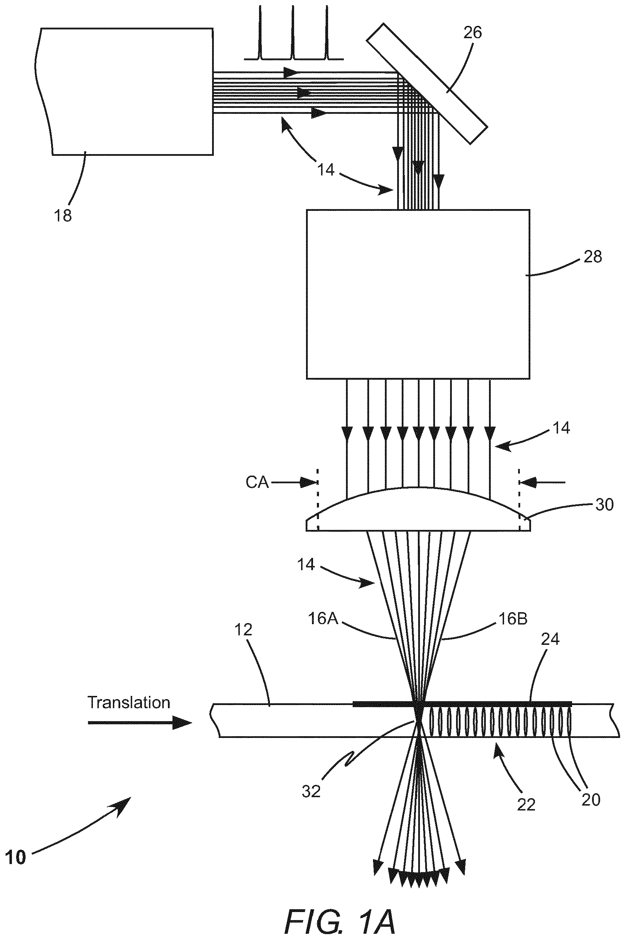

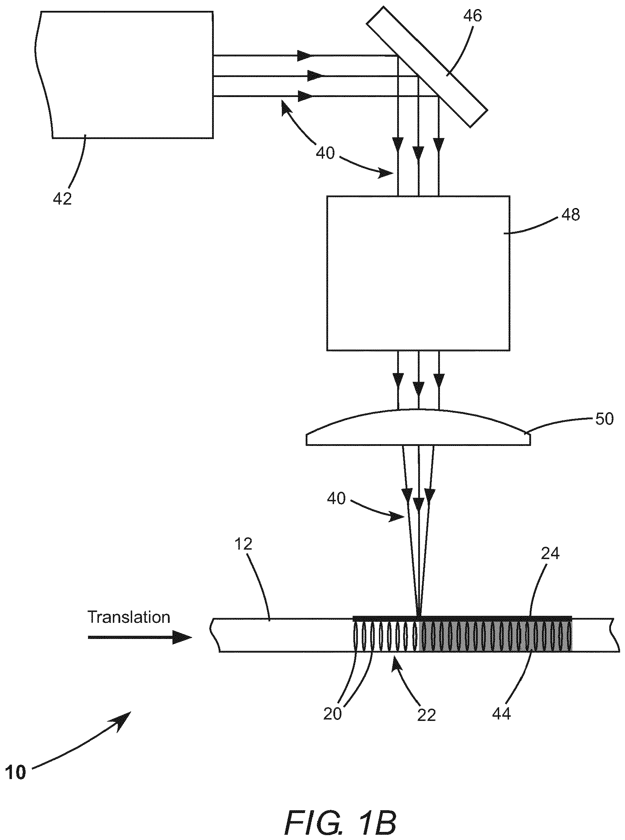

Referring now to the drawings, wherein like components are designated by like numerals, FIGS 1A and 1B schematically illustrate an apparatus 10 used in a prior-art laser-cutting method and which is also used in the laser-cutting method of the present invention. In both the prior-art and current method, a workpiece 12 made of a brittle material is exposed to a focused beam of pulsed laser-radiation 14. Focusing of pulsed laser-radiation 14 is indicated by converging rays 16A and 16B, representing the boundary rays of the focused beam of laser-radiation. Beam of pulsed laser-radiation 14 is generated by a source of pulsed laser-radiation 18 and has a wavelength at which the brittle material is transparent. Beam of pulsed laser-radiation 14 is a beam of repeated individual laser-pulses (here, only three shown) or repeated bursts of lasers pulses. Each pulse or each burst of pulses creates a defect 20 in the workpiece. A linear array 22 of defects 20 is created by translating workpiece 12 laterally with respect to beam of pulsed laser-radiation 14 as indicated by the arrow. The focused beam traces a cutting line 24, which follows the outline of an item to be cut from the workpiece.

Apparatus 10 further includes an optional beam-steering optic 26, an optional beam-conditioning optic 28, and a focusing lens 30. FIG. 1A depicts beam-steering optic 26 as a plane mirror arranged to intercept beam of pulsed laser-radiation 14 from laser-source 18 and direct it towards workpiece 12. Beam-conditioning optic 28 is depicted as an afocal beam-expander arranged to intercept directed beam of pulsed laser-radiation 14 and expand it to mostly fill clear aperture CA of focusing lens 30. Focusing lens 30 is depicted as a plano-convex lens that is arranged to intercept expanded beam of pulsed laser-radiation 14 and bring it to focus in workpiece 12. Beam-steering optics and beam-conditioning optics are well known in the art of optical design and a description thereof is not necessary for understanding the principles of the present invention.

Focusing lens 30 could be a single-element lens as depicted or a multi-element lens assembly. Workpiece 12 is depicted being translated with respect to a stationary focused beam of pulsed laser-radiation 14. Alternatively, galvanometer-actuated mirrors could be included in beam-conditioning optic 28 and a flat-field objective lens used for focusing lens 30, thereby enabling focused beam of pulsed laser-radiation 14 to be translated with respect to a stationary workpiece 12.

Focused beam of pulsed laser-radiation 14 converges to an elongated focus 32. Rays emerging from near the center of focusing lens 28 converge further therefrom than boundary rays 16A and 16B. Workpiece 12 is located such that elongated focus 32 overlaps or at least partially overlaps with workpiece 12. An elongated focus has advantages in laser-cutting processes, particularly in processes that create filaments to form voids, because the focused laser-radiation is distributed to favor creation of long voids that extend through the thickness of the workpiece. By way of example, an elongated focus can be created by filling the clear aperture of a focusing lens having spherical aberration.

Both the prior-art method and the method of the present invention further include exposing workpiece 12 to a beam of laser-radiation 40 generated by a source of laser-radiation 42, which is depicted in FIG. 1B and is different from laser-source 18 of FIG. 1A. Beam of laser-radiation 40 has a wavelength that is absorbed by the brittle material. Workpiece 12 is translated laterally with respect to beam of laser-radiation 40 such that the beam traces along linear array 22 of defects 20 created previously by beam of pulsed laser-radiation 14. Beam of laser-radiation 40 heats the brittle material weakened by defects 20, causing it to crack completely and creating a cut-edge 44, indicated in the drawing by shading.

Apparatus 10 further includes laser-source 42, an optional beam-steering optic 46, an optional beam-forming optic 48, and an optional focusing lens 50. In some applications, beam-forming optic 48 transforms beam of laser-radiation 40 from a Gaussian to a top-hat transverse mode. In some applications, an unfocused beam of laser-radiation 40 may be sufficient to completely cut workpiece 12. Otherwise, beam of laser-radiation 40 would need to be focused to illuminate a smaller area on a surface of workpiece 12. Workpiece 12 may be translated with respect to a stationary beam of laser-radiation 40 as depicted. Equally, the beam of laser-radiation may be scanned across a stationary workpiece.

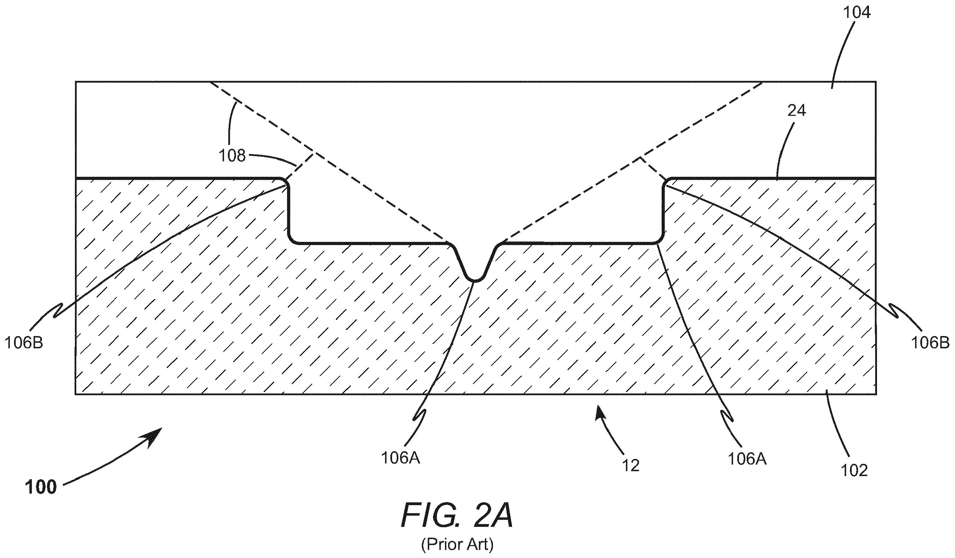

FIG. 2A schematically illustrates a prior-art solution 100 for laser-cutting and separating a workpiece made of a brittle material using the apparatus 10 of FIGS 1A and 1B. FIG. 2A depicts workpiece 12 from which an exemplary item 102 (shaded) is to be cut. The remainder of workpiece 12, which becomes scrap material 104 (unshaded), is to be separated from item 102. Cutting line 24 follows the outline of item 102, which includes both inside curves 106A and outside curves 106B. Prior-art relief lines 108 (indicated by long dashes) extend from curved sections of cutting line 24 into scrap material 104. Cutting line 24 and relief lines 108 are made by focusing beam of pulsed laser-radiation 14 of FIG. 1A onto workpiece 12 and translating the focused beam along the paths of cutting line 24 and relief lines 108. Exposure to focused beam of pulsed laser-radiation 14 creates defects that weaken workpiece 12 along the cutting line and relief lines. The drawing depicts workpiece 12 after exposure to beam of pulsed laser-radiation 14.

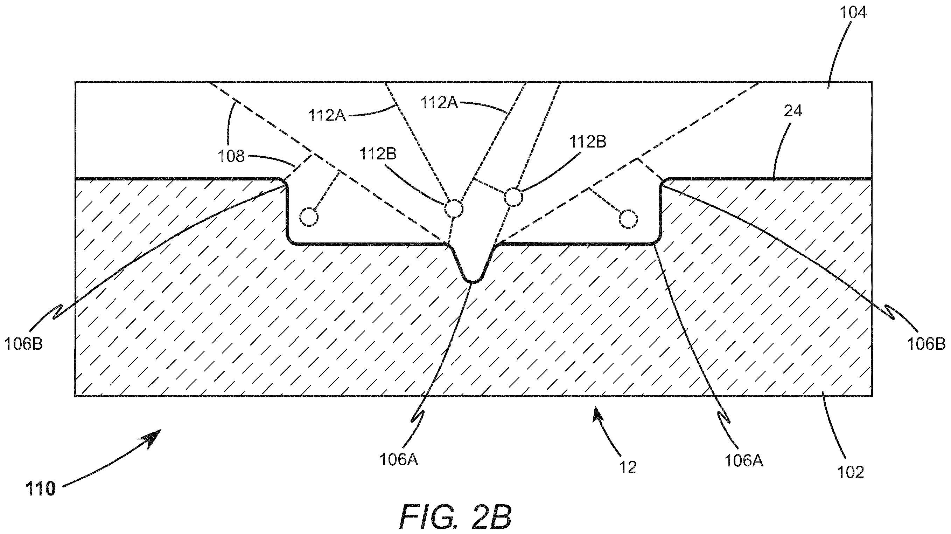

FIGS 2B - 2E schematically illustrates one preferred embodiment 110 of laser-cutting and separating method in accordance with the present invention and using the apparatus of FIGS 1A and 1B. FIG. 2B depicts workpiece 12 from which the same exemplary item 102 is to be cut. In addition to cutting line 24 and prior-art relief lines 108, inventive release features 112A and 112B (both indicated by short dashes) are made in scrap material 104 by translating focused beam of pulsed laser-radiation 14 along the paths of release features 112A and 112B. Release features 112A have a straight form and release features 112B have a circular form. Together, relief lines 108 and release features 112A and 112B assist separation of scrap material 104 from item 102.

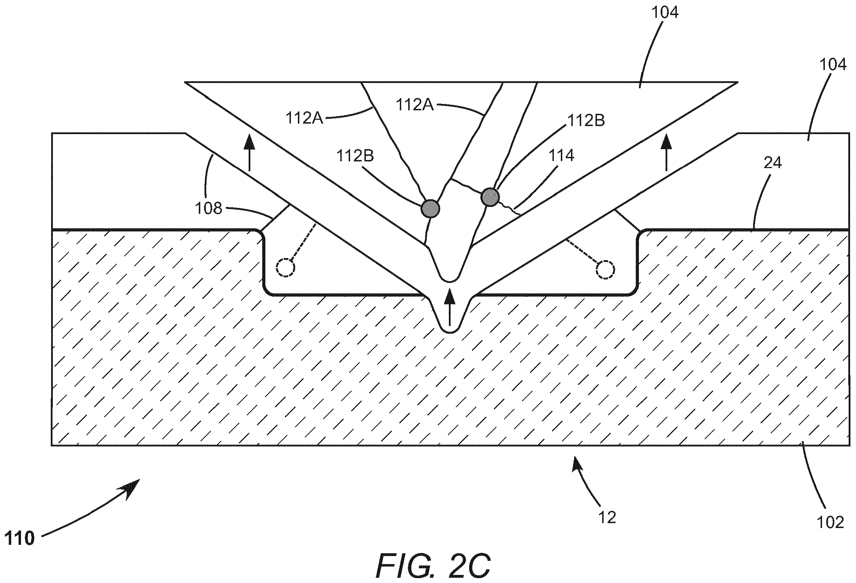

FIG. 2C depicts a first separation of scrap material 104 from item 102. Method 110 further includes directing beam of laser-radiation 40 of FIG. 1B onto workpiece 12 and translating the beam along cutting line 24 and relief lines 108. Release lines 112A and 112B are not exposed to laser-radiation 40 in this translating step. Workpiece 12 cracks along the cutting line and relief lines exposed to the beam of laser-radiation (indicated by solid lines in the drawing).

In a next heating step, beam of laser-radiation 40 is directed to and heats each shaded circular release feature 112B for a time sufficient to melt and contract brittle material within each heated circular release feature. Stresses induced by the melting and contracting in turn cause controlled cracking of scrap material 104. Cracks propagate out along straight release features 112A that are connected to the heated circular release feature. Additional controlled crack propagation is directed by straight release features 112A that are aligned with the intended directions of additional cracks 114. Arrows on the drawing indicate the first separation of cracked pieces of scrap material 104 from item 102.

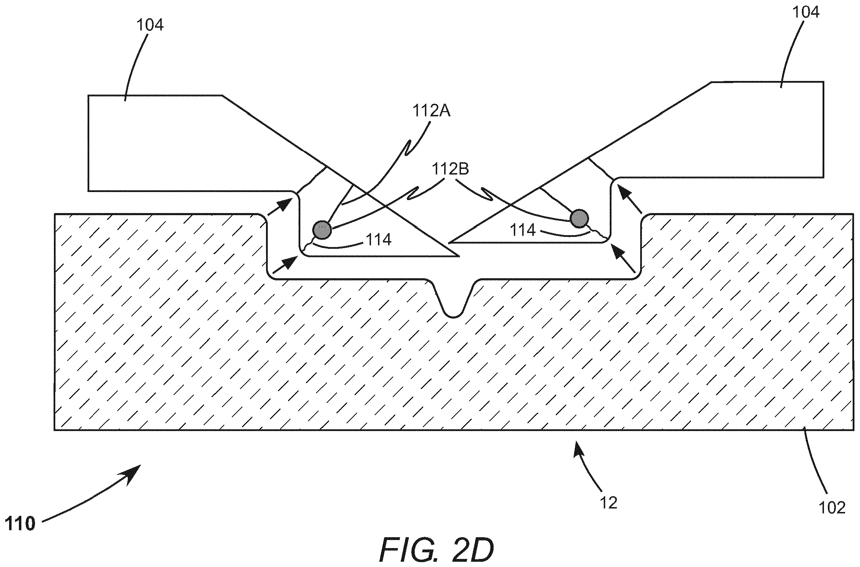

FIG. 2D depicts a second separation of remaining pieces of scrap material 104 from item 102. Beam of laser-radiation 40 is directed to and heats for a time brittle material within remaining circular release features 112B shaded in the drawing. As before, cracks propagate out along remaining straight release features 112A and additional cracks 114 are directed by some straight release features 112A. Arrows on the drawing indicate the second separation of cracked pieces of scrap material 104 from item 102.

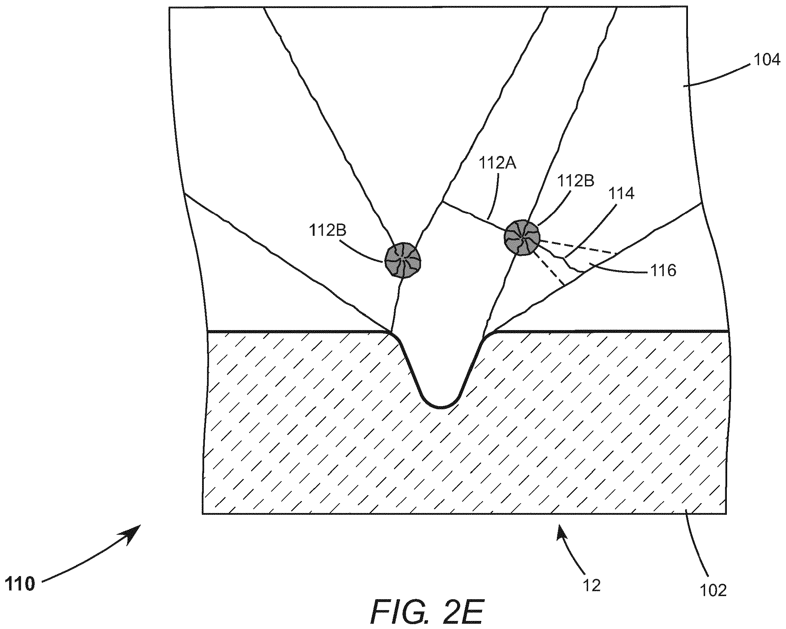

FIG. 2E depicts further detail of the first separation also depicted in FIG. 2C. Prolonged heating of circular release features 112B causes melting and may also cause cracking of the brittle material within each heated circular release feature. In addition to causing cracking in scrap material 104, the prolonged heating causes deformation thereof, which further assists separation of scrap material 104 from item 102. In general, a thinner workpiece would exhibit more deformation. For example, a workpiece made of glass having thickness less than about 1 millimeter (mm) easily deforms. Glass having thickness of about 2 mm still deforms sufficiently to aid separation.

In accordance with the present invention, each additional crack 114 is somewhat directed by a complementary straight release feature 112A located on an opposite side of the heated circular release feature. "Somewhat directed" means the additional crack propagates radially and haphazardly from the heated circular release feature, but within a predictable area 116 depicted on the drawing as bounded by two dashed lines. There is a minimum radius of the heated circular feature for predictable somewhat-directed crack propagation. For example, for a workpiece made of glass having thickness of about 2mm, minimum radii are in a range of about 0.2 mm to about 1.0 mm, depending on the specific pattern of release features selected and the type of glass.

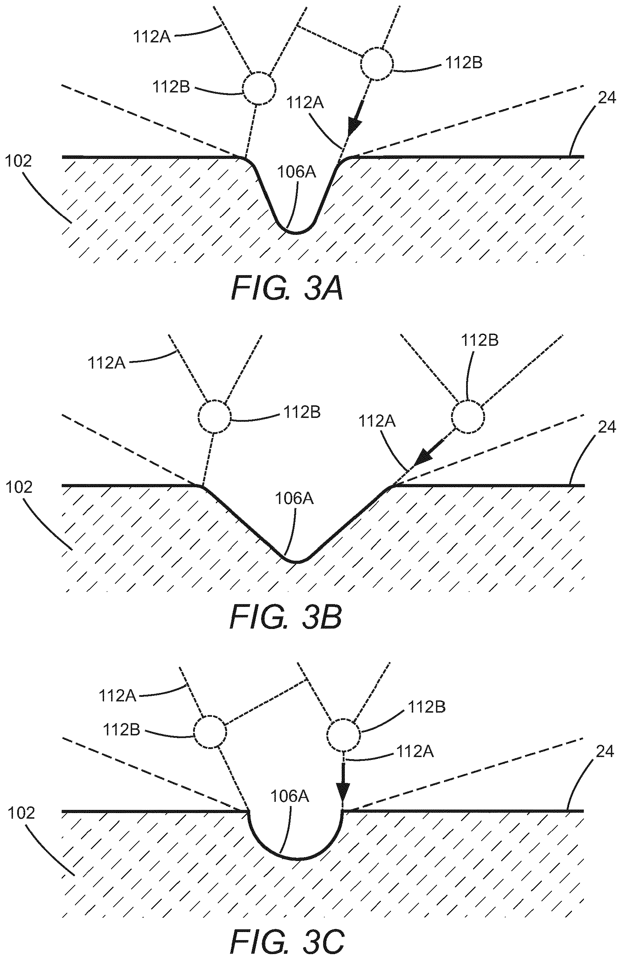

FIGS 3A - 3C schematically illustrate exemplary inventive release features for cutting and separating items 102 having different exemplary inside curves 106A. FIG. 3A depicts the same release features as FIGS 2A and 2D. The arrow in the drawing depicts the orientation of a critical straight release feature 112A for reliable separation of exemplary inside curve 106A. The critical straight release feature is tangential to the inside curve and intercepts cutting line 24 at an inflection point between a straight section and curved section thereof. A crack would propagate in the direction of the arrow, continuously along the critical straight feature and into the inside curve. FIG. 3B depicts a critical straight release feature 112A and crack propagation for another exemplary inside curve 106A that meets a straight section of cutting line 24 at a shallower angle. FIG. 3C depicts a critical straight release feature 112A and crack propagation for yet another exemplary inside curve 106A that forms a sharp edge with a straight section of cutting line 24. Again, the critical straight release feature is tangential to the inside curve.

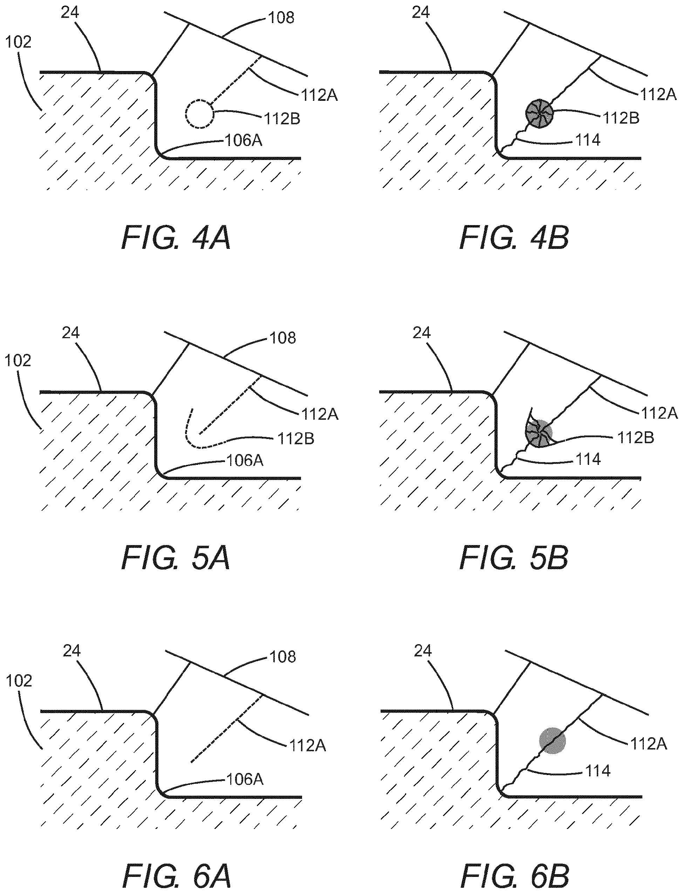

FIGS 4A - 10A schematically illustrate exemplary release features for separating scrap material from cut item 102 having inside curve 106A. FIGS 4B - 10B illustrate schematically controlled crack creation and propagation after selectively heating for a time the respective exemplary release features. FIG. 4A includes one straight release feature 112A and one circular release feature 112B, which has the form of a complete circle. These release features are proximate to the inside curve. FIG. 4B depicts one additional crack 114 created by heating circular release feature 112B.

The release features of FIG. 5A are similar to those of FIG. 4A, except that the circular release feature 112B has a semicircular form. FIG. 5B also has one additional crack 114 created by heating within circular release feature 112B. In the examples of FIGS 4B and 5B, crack propagation is directed by straight release feature 112A, in the manner described herein above. Also, in both examples, cracking along cutting line 24 is sufficient to stop additional crack 114 before it propagates into item 102.

FIG. 6A omits the circular release feature of FIG. 4A and falls outside the scope of the present invention. Often, one additional crack 114 would be created by heating for a time a location on the straight release feature 112A, as intended and as depicted in FIG. 6B which also falls outside the scope of the present invention. However, the inventors found that straight release features alone, without any circular release features, provide less-controlled and less-predictable cracking. It is therefore preferable to include a circular release feature for reliable cracking and separation, as in the examples of FIGS 4A and 5A. Among other advantages, a circular release feature contains the high internal stresses caused by prolonged heating by the beam of laser-radiation.

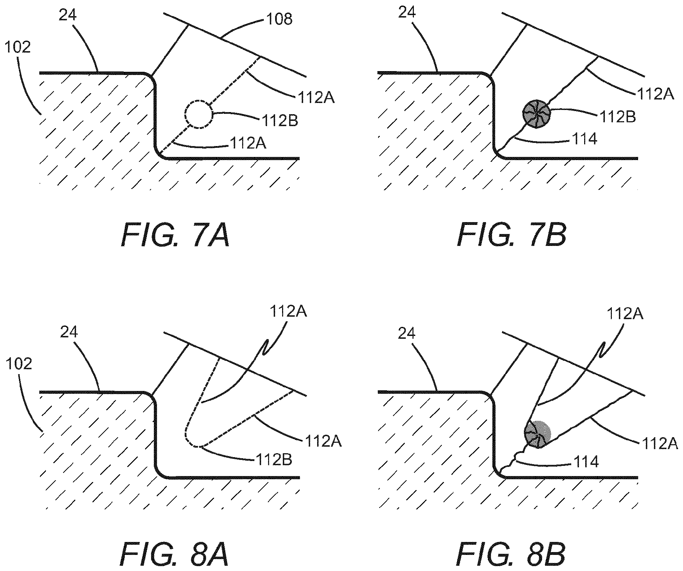

The release features of FIG. 7A are similar to those of FIG. 4A, but with the addition of one straight release feature 112A between circular release feature 112B and cutting line 24. In some instances the additional straight release feature provides more-controlled cracking between the circular release feature and the cutting line, as depicted in FIG. 7B.

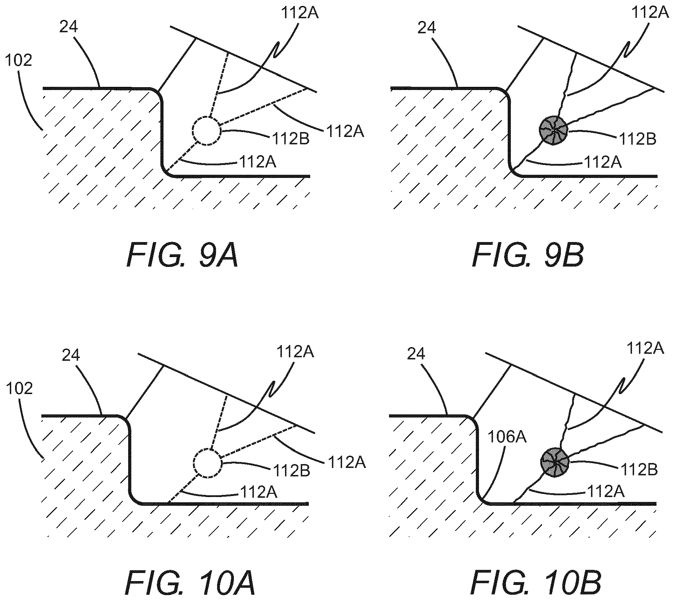

In FIG. 8A the circular release feature has the semicircular form of FIG. 5A, but there are two straight release features 112A instead of one to direct crack propagation. Heating within the circular release feature creates an additional crack 114, as depicted in FIG. 8B, while cracking along the two straight release features breaks the scrap material. Comparing FIG. 8B to FIG. 4A, the two straight release features break out an additional wedged piece from the scrap material, which may improve separation in some instances. Release features 112A and 112B depicted in FIGS 9A and 9B accomplish the same, but circular release feature 112B has the form of a complete circle.

The release features of FIG. 10A are the same as those of FIG. 9A. However, the release features in FIG. 10A are displaced to create a crack that propagates into cutting line 24 at a shallower angle and at a location close to (but not on) inside curve 106A, as depicted in FIG. 10B. Herein, a "shallow angle" means an angle of less than 45°, and preferably an angle of less than 30°. In some instances, a crack propagating directly into cutting line 24 at a high angle of incidence may produce unwanted chipping.

In a practical example of the present invention using apparatus 10 and method 110 to cut and separate soda lime glass, laser-source 18 is a "StarPico" ultra-short pulsed laser and laser-source 42 is a "SR 25i" CO₂ laser, both supplied by Coherent-Rofin GmbH of Hamburg, Germany. The exemplary glass has a thickness of about 2 mm. Laser-source 18 produces pulses having a duration of about 10ps and has a wavelength of 1064 nanometers (nm). Bursts of four individual pulses have a burst-energy of about 650 micro-Joule (µJ) at a burst-repetition-rate of about 5 kilohertz (kHz) are selected. These processing parameters create filaments and thereby defects in the form of voids. The preferred translation speed is about 20 mm/s during exposure of the workpiece to beam of pulsed laser-radiation 14.

Laser-source 42 produces pulses having a duration of about 10 µs and has a wavelength of about 10,600 nm. The pulse repetition rate is about 14 kHz. Beam of laser-radiation 40 illuminates an area on workpiece 12 having a diameter in the range 2 mm to 12 mm, preferably about 5 mm. The preferred translation speed is in the range 100 mm/s to 250 mm/s during exposure of cutting line 24 and relief lines 108. The dwell time to heat release features 112A and 112B is in the range 0.5 to 1.0 s, which is sufficient to cause localized melting and to crack scrap material 104.

Although the examples and figures presented herein cut and separate an item having scrap material located along just part of the outline of the item, the present invention could be applied to cut and separate an item that is completely encapsulated by scrap material. The optimum number and arrangement of release features depends on the geometry of the workpiece and the items to be separated from it, as well as the type of brittle material and thickness of the workpiece. In most instances straight release features are preferred for guiding crack formation. However, curved release features often work as well for separating an item and may be preferred for an item having a complex outline. Similarly, circular release features may have different circular forms, including circles, semicircles, ovals, and ellipsoids.

The present invention is described above in terms of a preferred embodiment and other embodiments. The invention is not limited, however, to the embodiments described and depicted herein. Rather, the invention is limited only by the claims appended hereto.

## Claims

1. A method for cutting and separating an item (102) from a workpiece (12) made of a brittle material using a first beam of pulsed laser-radiation (14) and a second beam of laser-radiation (40), the method comprising:
focusing the first beam (14) onto the workpiece (12);
making a cutting line (24) by translating the focused first beam (14) along the outline of the item (102), the outline of item including an inside curve (106A);
making a plurality of release features (112A,112B) spaced from the cutting line (24) by translating the focused first beam along the paths of the release features (112A,112B), the release features (112A, 112B) located within the workpiece (12) and outside the item (102), at least one release feature (112B) having a circular form, the at least one circular release feature (112B) proximate to the inside curve (106A) in the cutting line (24), the focused first beam (14) weakening the workpiece (12) along the cutting line (24) and along the release features (112A,112B);
directing the second beam (40) onto the cutting line (24);
translating the directed second beam (40) along the cutting line (24), the directed second beam (40) further weakening the workpiece (12) along the cutting line (24);
directing the second beam (40) to a location on the at least one circular release feature (112B); and
heating the workpiece (12) by locating the second beam (40) at the location over a dwell time, the dwell time sufficient to cause the workpiece (12) to deform and crack;
wherein the at least one circular release feature (112B) is arranged to cause a crack to propagate between the at least one circular release feature (112B) and the inside curve (106A) during the heating step, the propagation of the crack somewhat directed by a complementary straight release feature (112A) located on an opposite side of the at least one circular release feature (112B) from the crack.

2. The cutting and separating method of claim 1, wherein the focusing creates an elongated focus of the first beam (14) that at least partially overlaps the workpiece (12).

3. The cutting and separating method of claim 2, wherein the elongated focus is created by filling the clear aperture of a focusing lens having spherical aberration.

4. The cutting and separating method of claim 1, wherein the focused first beam (14) creates filaments and thereby creates defects within the workpiece (12).

5. The cutting and separating method of claim 4, wherein the defects are in the form of voids.

6. The cutting and separating method of claim 3, wherein the first beam (14) is generated by an ultrashort pulsed laser.

7. The cutting and separating method of claim 4, wherein the second beam (40) is generated by a CO₂ laser.

8. The cutting and separating method of claim 1, wherein the dwell time is in a range 0.5 second to 1.0 second.

9. The cutting and separating method of claim 1, wherein the circular release feature (112B) has one of the group of forms comprising circles, semicircles, ovals, and ellipsoids.

10. The cutting and separating method of claim 1, wherein the circular release feature (112B) has a radius in a range of about 0.2 millimeter to about 1.0 millimeter.

11. The cutting and separating method of claim 1, wherein the release features (112A,112B) are arranged to propagate the crack into the cutting line (24) at a shallow angle.

12. The cutting and separating method of claim 1, wherein the brittle material is glass.

## Patentansprüche

1. Verfahren zum Schneiden und Trennen eines Artikels (102) aus einem Werkstück (12) aus einem spröden Material unter Verwendung eines ersten Strahls von gepulster Laserstrahlung (14) und eines zweiten Strahls von Laserstrahlung (40), das Verfahren umfassend:
Fokussieren des ersten Strahls (14) auf das Werkstück (12) ;
Herstellen einer Schnittlinie (24) durch Verschieben des fokussierten ersten Strahls (14) am Umriss des Artikels (102) entlang, wobei der Umriss des Artikels eine Innenkrümmung (106A) aufweist;
Herstellen mehrerer Ablösungsmerkmale (112A, 112B), die von der Schnittlinie (24) beabstandet sind, durch Verschieben des fokussierten ersten Strahls entlang der Pfade der Ablösungsmerkmale (112A, 112B), wobei die Ablösungsmerkmale (112A, 112B) sich innerhalb des Werkstücks (12) und außerhalb des Artikels (102) befinden, wobei wenigstens ein Ablösungsmerkmal (112A, 112B) eine kreisförmige Form aufweist, wobei das wenigstens eine kreisförmige Ablösungsmerkmal (112B) nahe der Innenkrümmung (106A) in der Schnittlinie (24) ist, wobei der fokussierte erste Strahl (14) das Werkstück (12) entlang der Schnittlinie (24) und entlang der Ablösungsmerkmale (112A, 112B) schwächt;
Richten des zweiten Strahls (40) auf die Schnittlinie (24) ;
Verschieben des gerichteten zweiten Strahls (40) entlang der Schnittlinie (24), wobei der gerichtete zweite Strahl (40) das Werkstück (12) entlang der Schnittlinie (24) weiter schwächt;
Richten des zweiten Strahls (40) auf eine Stelle an dem wenigstens einen kreisförmigen Ablösungsmerkmal (112B); und
Erhitzen des Werkstücks (12) durch Positionieren des zweiten Strahls (40) über eine Verweilzeit an der Stelle, wobei die Verweilzeit ausreicht, um eine Verformung und Rissbildung des Werkstücks (12) zu veranlassen;
wobei das wenigstens eine kreisförmige Ablösungsmerkmal (112B) angeordnet ist, um zu veranlassen, dass ein Riss zwischen dem wenigstens einen kreisförmigen Ablösungsmerkmal (112B) und der Innenkrümmung (106A) während des Erhitzungsschritts wächst, wobei das Risswachstum durch ein ergänzendes gerades Ablösungsmerkmal (112A), das auf einer dem Riss entgegengesetzten Seite des wenigstens einen kreisförmigen Ablösungsmerkmals (112B) liegt, einigermaßen gerichtet wird.

2. Schneid- und Trennverfahren nach Anspruch 1, wobei das Fokussieren einen langgestreckten Fokus des ersten Strahls (14) entstehen lässt, der das Werkstück (12) wenigstens teilweise überlappt.

3. Schneid- und Trennverfahren nach Anspruch 2, wobei der langgestreckte Fokus durch Füllen der freien Öffnung einer Fokussierlinse, die eine kugelförmige Abweichung aufweist, hergestellt wird.

4. Schneid- und Trennverfahren nach Anspruch 1, wobei der fokussierte erste Strahl (14) Filamente entstehen lässt und dadurch Defekte innerhalb des Werkstücks (12) entstehen lässt.

5. Schneid- und Trennverfahren nach Anspruch 4, wobei die Defekte die Form von Hohlräumen haben.

6. Schneid- und Trennverfahren nach Anspruch 3, wobei der erste Strahl (14) von einem ultrakurzen gepulsten Laser erzeugt wird.

7. Schneid- und Trennverfahren nach Anspruch 4, wobei der zweite Strahl (40) von einem CO₂-Laser erzeugt wird.

8. Schneid- und Trennverfahren nach Anspruch 1, wobei die Verweilzeit in einem Bereich von 0,5 Sekunden bis 1,0 Sekunden ist.

9. Schneid- und Trennverfahren nach Anspruch 1, wobei das kreisförmige Ablösungsmerkmal (112B) eine von der Kreise, Halbkreise, Ovale und Ellipsoide umfassenden Gruppe von Formen aufweist.

10. Schneid- und Trennverfahren nach Anspruch 1, wobei das kreisförmige Ablösungsmerkmal (112B) einen Radius in einem Bereich von etwa 0,2 Millimeter bis etwa 1,0 Millimeter aufweist.

11. Schneid- und Trennverfahren nach Anspruch 1, wobei die Ablösungsmerkmale (112A, 112B) angeordnet sind, um den Riss mit einem flachen Winkel in die Schnittlinie (24) wachsen zu lassen.

12. Schneid- und Trennverfahren nach Anspruch 1, wobei das spröde Material Glas ist.

## Revendications

1. Procédé de coupe et de séparation d'un article (102) d'une pièce à usiner (12) constituée d'un matériau fragile à l'aide d'un premier faisceau de rayonnement laser pulsé (14) et d'un second faisceau de rayonnement laser (40), le procédé comprenant :
la focalisation du premier faisceau (14) sur la pièce à usiner (12) ;
la réalisation d'une ligne de coupe (24) en translatant le premier faisceau focalisé (14) le long du contour de l'article (102), le contour de l'article comportant une courbe intérieure (106A);
la réalisation d'une pluralité de caractéristiques de libération (112A, 112B) espacées de la ligne de coupe (24) en translatant le premier faisceau focalisé le long des trajets des caractéristiques de libération (112A, 112B), les caractéristiques de libération (112A, 112B) étant situées à l'intérieur de la pièce à usiner (12) et à l'extérieur de l'article (102), au moins une caractéristique de libération (112B) ayant une forme circulaire, l'au moins une caractéristique de libération circulaire (112B) étant proche de la courbe intérieure (106A) dans la ligne de coupe (24), le premier faisceau focalisé (14) affaiblissant la pièce à usiner (12) le long de la ligne de coupe (24) et le long des caractéristiques de libération (112A, 112B) ;
l'orientation du second faisceau (40) sur la ligne de coupe (24) ;
la translation du second faisceau orienté (40) le long de la ligne de coupe (24), le second faisceau orienté (40) affaiblissant davantage la pièce à usiner (12) le long de la ligne de coupe (24) ;
l'orientation du second faisceau (40) vers un emplacement sur l'au moins une caractéristique de libération circulaire (112B) ; et
le chauffage de la pièce à usiner (12) en positionnant le second faisceau (40) à l'emplacement pendant une durée de séjour, la durée de séjour étant suffisante pour amener la pièce à usiner (12) à se déformer et à se fissurer ;
dans lequel l'au moins une caractéristique de libération circulaire (112B) est agencée pour entraîner la propagation d'une fissure entre l'au moins une caractéristique de libération circulaire (112B) et la courbe intérieure (106A) durant l'étape de chauffage, la propagation de la fissure étant en partie dirigée par une caractéristique de libération rectiligne complémentaire (112A) située sur un côté opposé de l'au moins une caractéristique de libération circulaire (112B) par rapport à la fissure.

2. Procédé de coupe et de séparation selon la revendication 1, dans lequel la focalisation crée un foyer allongé du premier faisceau (14) qui chevauche au moins partiellement la pièce à usiner (12).

3. Procédé de coupe et de séparation selon la revendication 2, dans lequel le foyer allongé est créé en remplissant l'ouverture claire d'une lentille de focalisation présentant une aberration sphérique.

4. Procédé de coupe et de séparation selon la revendication 1, dans lequel le premier faisceau focalisé (14) crée des filaments et crée ainsi des défauts dans la pièce à usiner (12).

5. Procédé de coupe et de séparation selon la revendication 4, dans lequel les défauts ont la forme de vides.

6. Procédé de coupe et de séparation selon la revendication 3, dans lequel le premier faisceau (14) est généré par un laser pulsé ultra-court.

7. Procédé de coupe et de séparation selon la revendication 4, dans lequel le second faisceau (40) est généré par un laser à CO₂.

8. Procédé de coupe et de séparation selon la revendication 1, dans lequel la durée de séjour est comprise dans une plage de 0,5 seconde à 1,0 seconde.

9. Procédé de coupe et de séparation selon la revendication 1, dans lequel la caractéristique de libération circulaire (112B) a une forme parmi le groupe comprenant cercles, demi-cercles, ovales et ellipsoïdes.

10. Procédé de coupe et de séparation selon la revendication 1, dans lequel dans lequel la caractéristique de libération circulaire (112B) a un rayon dans une plage d'environ 0,2 millimètre à environ 1,0 millimètre.

11. Procédé de coupe et de séparation selon la revendication 1, dans lequel les caractéristiques de libération (112A,112B) sont agencées pour propager la fissure dans la ligne de coupe (24) à un angle peu prononcé.

12. Procédé de coupe et de séparation selon la revendication 1, dans lequel le matériau fragile est du verre.
